(19) Europäisches Patentamt
European Patent Office
Office européen des brevets

(11) **EP 4 776 340 A1**

(12) **EUROPEAN PATENT APPLICATION**
published in accordance with Art. 153(4) EPC

(43) Date of publication:
**15.07.2026  Bulletin 2026/29**

(21) Application number: **24809540.8**

(22) Date of filing: **22.10.2024**

(51) International Patent Classification (IPC):
$H01M\ 4/36^{(2006.01)}$        $H01M\ 4/58^{(2010.01)}$
$H01M\ 4/136^{(2010.01)}$       $H01M\ 10/0525^{(2010.01)}$
$H01M\ 4/62^{(2006.01)}$

(52) Cooperative Patent Classification (CPC):
Y02E 60/10

(86) International application number:
**PCT/CN2024/126527**

(87) International publication number:
**WO 2026/076748 (16.04.2026 Gazette 2026/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.10.2024  CN 202411419166**

(71) Applicant: **Hubei Wanrun New Energy Technology
Co., Ltd.
Shiyan, Hubei 442500 (CN)**

(72) Inventors:
• **PENG, Tangping
  Shiyan, Hubei 442500 (CN)**
• **LV, Fei
  Shiyan, Hubei 442500 (CN)**
• **MA, Xiangrui
  Shiyan, Hubei 442500 (CN)**

(74) Representative: **Manitz Finsterwald
Patent- und Rechtsanwaltspartnerschaft mbB
Martin-Greif-Straße 1
80336 München (DE)**

(54) **COMPOSITE PHOSPHATE POSITIVE ELECTRODE MATERIAL, AND PREPARATION METHOD THEREFOR AND USE THEREOF**

(57)    The present disclosure provides a composite phosphate cathode material, belonged to the technical field of cathode materials. The composite phosphate cathode material includes a composite phosphate. The composite phosphate is represented by a general formula (I): $Na_4Fe_{(2.91-a-b-e-d)}Mn_aTi_bNi_cCu_d(PO_4)_2(P_2O_7)M_e$ (1), where M is N, F, or a combination thereof, $0<a<0.2$, $0<b<0.05$, $0<c<0.04$, $0<d<0.05$, $0.05<a+b+c+d<0.2$, and $0\leq e<0.01$. The present disclosure is conducive to increasing a practical capacity of the composite phosphate cathode material, and improving cycling performance and rate performance of a battery.

```
weighing and mixing metal sources and non-metal sources for
preparing the composite phosphate cathode material to obtain a
mixture, wherein a molar ratio of sodium to phosphorus in the
mixture is in a range from 1:1 to 1.01:1                         ── S100

                          ↓

dispersing the mixture in a solvent to obtain a first slurry     ── S200

                          ↓

grinding the first slurry to obtain a second slurry              ── S300

                          ↓

drying and then sintering the second slurry to obtain the composite
phosphate cathode material, wherein the composite phosphate
cathode material comprises a composite phosphate, and the
composite phosphate is represented by a general formula (I):
Na₄Fe(2.91-a-b-c-d)MnₐTi_bNi_cCu_d(PO₄)₂(P₂O₇)Mₑ  (I),
where M is N, F, or a combination thereof, 0<a<0.2, 0<b<0.05,
0<c<0.04, 0<d<0.05, 0.05<a+b+c+d<0.2, and 0≤e<0.01           ── S400
```

FIG. 1

EP 4 776 340 A1

**Description**

TECHNICAL FIELD

The present disclosure relates to the technical field of electrode materials, specifically to a composite phosphate cathode material, a preparation method thereof, and an application thereof.

BACKGROUND

Composite phosphate cathode materials have attracted great attention in the field of sodium-ion and lithium-ion batteries due to their unique advantages, including low cost, environmental friendliness, and high structural stability. However, their electrical conductivity and specific capacity limit their large-scale industrial applications.

NFPP ($Na_4Fe_3(PO_4)_2P_2O_7$) is a specific composite phosphate compound that belongs to the class of polyanion-type cathode materials. It possesses a high operating voltage, a high theoretical specific capacity, and a small volume change (the theoretical capacity is about 129 mA/hg, the operating potential is about 3.1 V vs. $Na^+$/Na, and the volume change is about 4%). This gives NFPP advantages in energy density, making it widely studied for use in sodium-ion batteries. However, practical applications have revealed that the electrochemical performance of NFPP is lower than its theoretical capacity, possibly due to the difficulties in $Na^+$ diffusion and electron transfer within the phosphate-pyrophosphate framework. Therefore, there is a need to provide a method to enhance the practical capacity of NFPP.

SUMMARY

In view of the issues mentioned in the background, the present disclosure provides a composite phosphate cathode material, a preparation method thereof, and an application thereof, aiming to address the technical problem of the low practical capacity of NFPP.

In a first aspect, an embodiment of the present disclosure provides a composite phosphate cathode material including a composite phosphate. The composite phosphate is represented by a general formula (1):

$$Na_4Fe_{(2.91-a-b-c-d)}Mn_aTi_bNi_cCu_d(PO_4)_2(P_2O_7)M_e \qquad (I),$$

where M is N, F, or a combination thereof, $0<a<0.2$, $0<b<0.05$, $0<c<0.04$, $0<d<0.05$, $0.05<a+b+c+d<0.2$, and $0\leq e<0.01$.

In the technical solution of the embodiment of the present disclosure, by doping appropriate proportions of manganese, titanium, nickel, and copper elements into sodium iron phosphate-pyrophosphate to prepare the composite phosphate cathode material, the band gap of the composite phosphate cathode material is effectively reduced, and the number of active sites for $Na^+$ diffusion is increased, thereby improving the cycle life and other electrochemical performances of the composite phosphate cathode material. Additionally, in the composite phosphate cathode material, the doping amount of each element is within an appropriate range, enhancing the crystal structure of NFPP while ensuring good integration of the doping elements with NFPP crystals, thus minimizing the formation of impurity phases.

In some embodiments, the composite phosphate satisfies at least one of the following conditions:

(1)

$$0.001<b/a<0.05;$$

(2)

$$0.001<c/a<0.04;$$

(3)

$$0.001<d/a<0.05.$$

In these embodiments, the doping ratios among the elements are within appropriate ranges, thereby exhibiting a synergistic effect that enhances the NFPP structure through configuration entropy.

In some embodiments, the composite phosphate is represented by a general formula (II):

$$Na_4Fe_{(2.91-a-b-c-d)}Mn_aTi_bNi_cCu_d(PO_4)_2(P_2O_7)N_{e1}F_{e2} \qquad (II);$$

where $0<e1$, $0<e2$, $0<e1+e2<0.01$.

In these embodiments, the doping of N optimizes the lattice structure of the composite phosphate cathode material, reduces the polarization of sodium ions during the charge-discharge process. The synergistic effect of N with other metal ions enhances the electrical conductivity and ion diffusion rate of the composite phosphate cathode material, thereby improving the cycle life and other electrochemical performances of the composite phosphate cathode material. The synergistic effect of F with other metal ions effectively regulates the spin states of the electrons in the 3d orbitals of ferrous ions, adjusting the ferrous ions from an original low-spin state to a medium-spin state, thereby optimizing the bond strength between oxidation and reduction processes. The co-doping of N and F with other metal ions collectively enhances the rate performance, electrical performance reversibility, and other electrochemical performances of NFPP.

In some embodiments, $0<e1<0.005$, and $0<e2<0.005$.

In these embodiments, the doping amounts of N and F are within appropriate ranges, allowing N and F to effectively replace phosphate groups and work synergistically with other metal ions to enhance the rate performance, electrochemical reversibility, and other electrochemical performances of the composite phosphate cathode material, while avoiding corrosion of the composite phosphate cathode material due to formation of HF during the sintering process, preventing deterioration of the performances of the composite phosphate cathode material.

In some embodiments, the composite phosphate cathode material further includes a carbon material coated on the surface of the composite phosphate, and a mass percentage of the carbon material in the composite phosphate cathode material is in a range from 1.6% to 5%.

In these embodiments, the appropriate amounts of the doping metals in the composite phosphate function to catalyze the graphitization of the surface carbon layer to form a high-quality carbon layer. The resulting carbon material layer has a loose porous structure and an appropriate proportion in the composite phosphate cathode material, which enhances the electron conductivity of the composite phosphate cathode material while avoiding a negative effect on the compaction density of the composite phosphate cathode material.

In a second aspect, an embodiment of the present disclosure provides a method for preparing a composite phosphate cathode material, including the following steps:

weighing and mixing metal sources and non-metal sources for preparing the composite phosphate cathode material to obtain a mixture, wherein a molar ratio of sodium to phosphorus is in a range from 1:1 to 1.02:1;
dispersing the mixture in a solvent to obtain a first slurry;
grinding the first slurry to obtain a second slurry; and
drying and then sintering the second slurry to obtain the composite phosphate cathode material;
wherein the composite phosphate cathode material includes a composite phosphate, and the composite phosphate is represented by a general formula (1):

$$Na_4Fe_{(2.91-a-b-c-d)}Mn_aTi_bNi_cCu_d(PO_4)_2(P_2O_7)M_e \qquad (I),$$

where M is N, F, or a combination thereof, $0<a<0.2$, $0<b<0.05$, $0<c<0.04$, $0<d<0.05$, $0.05<a+b+c+d<0.2$, and $0\leq e<0.01$.

In the technical solution of the embodiment of the present disclosure, the composite phosphate cathode material is prepared using a solid-state reaction method, which simplifies the preparation process and does not require complex equipment, and thus is conducive to reducing the overall production cost. The prepared composite phosphate cathode material possesses good crystallinity and crystal structure, and has a high thermal stability, which is conducive to improving the cycling performance and efficiency of the battery. In the preparation method, by doping suitable proportions of manganese, titanium, nickel, and copper elements into sodium iron phosphate-pyrophosphate to prepare the composite phosphate cathode material, the band gap of the composite phosphate cathode material is effectively reduced, and the number of active sites for $Na^+$ diffusion is increased, thereby improving the cycle life and other electrochemical performances of the composite phosphate cathode material. Additionally, in the composite phosphate cathode material, the doping amount of each element is within an appropriate range, enhancing the crystal structure of NFPP while ensuring good integration of the doping elements with NFPP crystals, thus minimizing the formation of impurity phases.

In some embodiments, the method for preparing the composite phosphate cathode material satisfies at least one of the following conditions:

(1)

$$0.001<b/a<0.05;$$

(2)

$$0.001 < c/a < 0.04;$$

(3)

$$0.001 < d/a < 0.05;$$

(4) particles in the second slurry have a D50 particle size in a range from 0.2 μm to 1 μm and a D100 particle size smaller than or equal to 10 μm;

(5) the sintering is performed at a sintering temperature of 520 °C to 650 °C for a sintering time of 7 hours (h) to 14 h;

(6) the metal sources include a sodium source, an iron source, a manganese source, a titanium source, a nickel source, and a copper source, and the non-metal sources include a carbon source and a phosphorus source;

the sodium source is selected from the group consisting of sodium phosphate, sodium monohydrogen phosphate, sodium dihydrogen phosphate, and any combination thereof;

the iron source is selected from the group consisting of ferric phosphate, ferrous monohydrogen phosphate, ferrous oxalate, and any combination thereof;

the manganese source is selected the group consisting of manganese carbonate, manganese acetate, manganese oxalate, manganese dioxide, trimanganese tetroxide, and any combination thereof;

the titanium source is selected from the group consisting of titanium oxide, titanium tetraethoxide, titanium isopropoxide, and any combination thereof;

the nickel source is selected from the group consisting of nickel carbonate, nickel acetate, nickel oxalate, nickel oxide, and any combination thereof;

the copper source is selected from the group consisting of copper acetate, copper oxalate, copper citrate, copper oxide, and any combination thereof;

the carbon source is selected from the group consisting of polyethylene glycol, glucose, citric acid, sucrose, starch, and any combination thereof;

the phosphorus source is selected from the group consisting of sodium dihydrogen phosphate dihydrate, disodium hydrogen phosphate, ammonium dihydrogen phosphate, diammonium hydrogen phosphate, and any combination thereof.

Optionally, the non-metal sources further include a nitrogen source, a fluorine source, or a combination thereof.

Optionally, the nitrogen source is selected from the group consisting of urea, polyvinyl pyrrolidone, dopamine, melamine, and any combination thereof.

Optionally, the fluorine source is selected from the group consisting of sodium fluoride, ammonium fluoride, manganese fluoride, and any combination thereof.

In these embodiments, by controlling the particle size of the solid particles of the second slurry within an appropriate range, the compaction density of the composite phosphate cathode material can be improved while a high specific surface area of the particles can be maintained, avoiding adversely affecting ion migration and melting during the sintering process, and ensuring successful formation of the NFPP crystal phase, thereby enhancing the electrochemical performances such as the energy density and sodium ion transport efficiency of the composite phosphate cathode material.

By controlling the sintering temperature and sintering time within appropriate ranges, the crystal particle size and specific surface area of the formed composite phosphate can be controlled within appropriate ranges, allowing normal growth of crystal particle, and reducing the formation of impurity phases, which further improves the compaction density and sodium ion transport efficiency of the composite phosphate cathode material. Additionally, the appropriate sintering temperature and time facilitate the complete graphitization of the organic carbon source which is conducive to improving the electron conductivity of the composite phosphate cathode material.

The materials for each metal source and non-metal source are readily available, cost-effective, and chemically stable, facilitating the preparation of the composite phosphate cathode material with controllable doping ratios.

In a third aspect, an embodiment of the present disclosure provides a cathode plate including the above-described composite phosphate cathode material.

In this embodiment, the cathode plate includes the above-described composite phosphate cathode material, thus having electrochemical performances such as a relatively high practical capacity, an improved cycling performance, and an improved rate performance.

In a fourth aspect, an embodiment of the present disclosure provides a secondary battery including the above-described cathode plate.

In this embodiment, the secondary battery includes the above-described cathode plate, thus having electrochemical performances such as a relatively high practical capacity, an improved cycling performance, and an improved rate performance.

In a fifth aspect, an embodiment of the present disclosure provides an electrical device including the above-described cathode plate or secondary battery.

In this embodiment, the electrical device includes the above-described cathode plate or secondary battery, thus having electrochemical performances such as a relatively high practical capacity, an improved cycling performance, and an improved rate performance.

The above description is merely a summary of the technical solutions of the present disclosure. In order to clearly illustrate the technical solutions of the present disclosure for implementation according to the contents of the specification, as well as to make the above and other objectives, features, and advantages of the present disclosure more apparent and comprehensible, specific embodiments of the present disclosure are described below.

BRIEF DESCRIPTION OF THE DRAWINGS

In order to clearly illustrate the technical solutions of the present disclosure, the drawings used in the present disclosure will be briefly described below. Apparently, the drawings described below are merely for some embodiments of the present disclosure. For those of ordinary skill in the art, other drawings can be obtained according to the disclosed drawings without any creative effort.

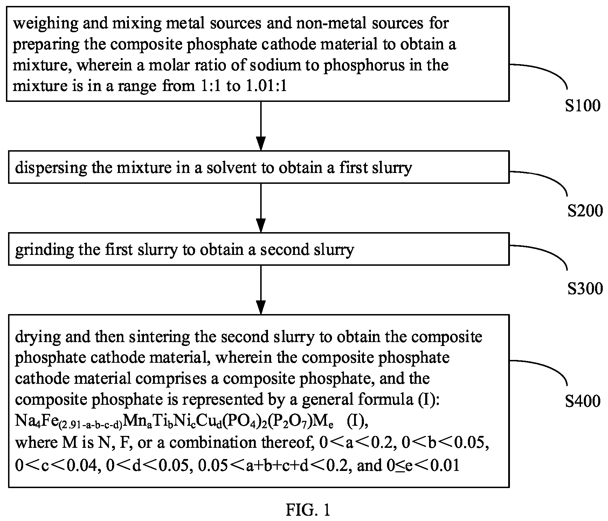

FIG. 1 is a flowchart of a method for preparing a composite phosphate cathode material in an embodiment of the present disclosure.

DETAILED DESCRIPTION

The technical solutions of the present disclosure will be described more comprehensively below in conjunction with the accompanying drawings. The embodiments below are only for clearly illustrating the technical solutions of the present disclosure, and thus are merely examples rather than limitations on the patent protection scope of the present disclosure.

Unless otherwise defined, all technical and scientific terms used herein have the same meaning as commonly understood by those of ordinary skill in the art to which the present disclosure pertains. The terms used in the specification of the present disclosure herein are for the purpose of describing specific embodiments only and are not intended to limit the present disclosure. The terms "include", "have", and any variations thereof in the specification, claims, and the above drawing description of the present disclosure are intended to encompass non-exclusive inclusions.

The technical terms "first" and "second" mentioned in the description of the embodiments of the present disclosure are merely used for distinguishing different objects, and cannot be construed as indicating or implying a relative importance, or implicitly specifying the number, specific order, or primary-secondary relationship of the indicated technical features. In the description of the present disclosure, "a plurality of" means two or more, unless otherwise defined explicitly and specifically.

The term "embodiment" means that specific features, structures, or characteristics described with reference to the embodiment can be included in at least one embodiment of the present disclosure. The term "embodiment" appeared in various places in the specification does not necessarily refer to the same embodiment or an independent or alternative embodiment that is mutually exclusive with other embodiments. It can be explicitly and implicitly understood by those skilled in the art that the embodiment described herein can be combined with other embodiments.

The term "and/or" in the description of the embodiments of the present disclosure merely describes a relationship between associated objects, indicating that three types of relationships may exist. For example, A and/or B can indicate three situations: only A exists, both A and B exist, and only B exists. In addition, the character "/" herein generally represents that the former and later associated objects are in an "or" relationship.

The term "multiple" in the description of the embodiments of the present disclosure means two or more. Similarly, "multiple groups" means two or more groups, and "multiple pieces" means two or more pieces.

Composite phosphate cathode materials are a class of promising materials for sodium-ion batteries, in which sodium iron phosphate-pyrophosphate (NFPP) is a common iron-based phosphate cathode material. However, due to the insulating characteristic of the phosphate groups, NFPP exhibits poor electron conductivity, which limits electrochemical performance thereof.

To address the technical issues of poor electron conductivity and practical capacity to be improved in current NFPP cathode materials, the present disclosure provides a composite phosphate cathode material, a preparation method thereof, a cathode plate, a secondary battery, and an electrical device. By doping appropriate proportions of manganese, titanium, nickel, and copper elements into sodium iron phosphate-pyrophosphate to prepare the composite phosphate cathode material, the compaction density and electron conductivity of the composite phosphate cathode material can be improved. Consequently, electrochemical performances such as the practical capacity, cycling performance, and rate performance of the composite phosphate cathode material, cathode plate, secondary battery, and electrical device are also improved.

The electrical devices provided in the embodiments of the present disclosure can include, but are not limited to, smartphones, tablets, laptops, electric toys, power tools, electric bicycles, electric vehicles, ships, and spacecraft. The electric toys can include stationary or mobile electric toys, such as gaming consoles, electric toy cars, electric toy boats, and electric toy airplanes. The spacecraft can include aircraft, rockets, space shuttles, and spaceships.

In a first aspect, an embodiment of the present disclosure provides a composite phosphate represented by a general formula (I):

$$Na_4Fe_{(2.91-a-b-c-d)}Mn_aTi_bNi_cCu_d(PO_4)_2(P_2O_7)M_e \qquad (I),$$

where M is N, F, or a combination thereof, $0<a<0.2$, $0<b<0.05$, $0<c<0.04$, $0<d<0.05$, $0.05<a+b+c+d<0.2$, and $0\leq e<0.01$.

For example, a can be 0.05, 0.1, 0.15, 0.15, 0.18, etc.; b can be 0.0002, 0.0005, 0.001, 0.002, 0.003, 0.0045, 0.0046, etc.; c can be 0.0002, 0.0005, 0.001, 0.002, 0.0035, etc.; d can be 0.0002, 0.0005, 0.001, 0.002, 0.0035, 0.0045, etc.; e can be 0, 0.001, 0.0015, 0.002, 0.0025, 0.003, 0.004, 0.0045, 0.005, 0.007, etc.; a+b+c+d can be 0.06, 0.07, 0.08, 0.09, 0.1, 0.102, 0.104, 0.134, 0.137, 0.1515, 0.154, 0.155, 0.157, 0.183, 0.184, 0.187, 0.19, 0.195, etc.

In the technical solution of the embodiment of the present disclosure, by doping appropriate proportions of manganese, titanium, nickel, and copper elements into sodium iron phosphate-pyrophosphate to prepare the composite phosphate cathode material, the band gap of the composite phosphate cathode material is effectively reduced, and the number of active sites for $Na^+$ diffusion is increased, thereby improving the cycle life and other electrochemical performances of the composite phosphate cathode material. Additionally, in the composite phosphate cathode material, the doping amount of each element is within an appropriate range, enhancing the crystal structure of NFPP while ensuring good integration of the doping elements with NFPP crystals, thus minimizing the formation of impurity phases.

In some embodiments, the composite phosphate satisfies at least one of the following conditions:

(1)

$$0.001<b/a<0.05;$$

(2)

$$0.001<c/a<0.04;$$

(3)

$$0.001<d/a<0.05.$$

For example, b/a can be 0.0011, 0.002, 0.003, 0.0035, 0.004, 0.005, 0.006, 0.007, 0.008, 0.009, 0.01, 0.011, 0.012, 0.013, 0.014, 0.015, 0.016, 0.017, 0.018, 0.019, 0.02, 0.021, 0.022, 0.023, 0.024, 0.025, 0.028, 0.03, 0.04, 0.045, etc.; c/a can be 0.0011, 0.002, 0.003, 0.004, 0.005, 0.0055, 0.0058, 0.006, 0.0065, 0.0066, 0.0067, 0.007, 0.0075, 0.0076, 0.0077, 0.008, 0.009, 0.01, 0.011, 0.012, 0.013, 0.014, 0.015, 0.016, 0.018, 0.02, 0.023, 0.025, 0.03, 0.035, etc.; d/a can be 0.0011, 0.002, 0.003, 0.004, 0.005, 0.0055, 0.0058, 0.006, 0.0065, 0.0066, 0.0067, 0.007, 0.0075, 0.0076, 0.0077, 0.008, 0.009, 0.01, 0.011, 0.012, 0.013, 0.014, 0.015, 0.016, 0.018, 0.02, 0.023, 0.025, 0.03, 0.035, 0.04, 0.045, etc.

In these embodiments, the doping ratios among the elements are within appropriate ranges, thereby exhibiting a synergistic effect that enhances the NFPP structure through configuration entropy.

In some embodiments, the composite phosphate satisfies at least one of the following conditions:

(1)

$$0.001<b/a<0.05;$$

(2)

$$0.001<c/a<0.04;$$

(3)

$$0.001 < d/a < 0.05.$$

In some embodiments, the composite phosphate is represented by a general formula (II):

$$Na_4Fe_{(2.91-a-b-c-d)}Mn_aTi_bNi_cCu_d(PO_4)_2(P_2O_7)N_{e1}F_{e2} \qquad (II);$$

where $0 < e1$, $0 < e2$, $0 < e1+e2 < 0.01$.

For example, e1 can be 0.0001, 0.0002, 0.0003, 0.0004, 0.0005, 0.0006, 0.0007, 0.0008, 0.0009, 0.001, 0.0015, 0.002, 0.0025, 0.003, 0.0035, 0.004, 0.0045, etc.; 0.0001, 0.0002, 0.0003, 0.0004, 0.0005, 0.0006, 0.0007, 0.0008, 0.0009, 0.001, 0.0015, 0.002, 0.0025, 0.003, 0.0035, 0.004, 0.0045, etc.; e1+e2 can be 0.001, 0.0015, 0.002, 0.0025, 0.003, 0.004, 0.0045, 0.005, 0.007, 0.008, 0.009, 0.0095, etc.

In these embodiments, the doping of N optimizes the lattice structure of the composite phosphate cathode material, reduces the polarization of sodium ions during the charge-discharge process. The synergistic effect of N with other metal ions enhances the electrical conductivity and ion diffusion rate of the composite phosphate cathode material, thereby improving the cycle life and other electrochemical performances of the composite phosphate cathode material. The synergistic effect of F with other metal ions effectively regulates the spin states of the electrons in the 3d orbitals of ferrous ions, adjusting the ferrous ions from a low-spin state in an original sample to a medium-spin state, thereby optimizing the bond strength between oxidation and reduction processes. The co-doping of N and F with other metal ions collectively enhances the rate performance and electrical performance reversibility of NFPP.

In some embodiments, $0 < e1 < 0.005$, and $0.0005 < e2 < 0.005$.

In these embodiments, the doping amount of each element is within an appropriate range, and the doping amounts of N and F are also within appropriate ranges, allowing N and F to effectively replace phosphate groups and work synergistically with other metal ions to enhance the rate performance, electrochemical reversibility, and other electrochemical performances of the composite phosphate cathode material, while avoiding corrosion of the composite phosphate cathode material due to formation of HF during the sintering process, preventing deterioration of the performances of the composite phosphate cathode material.

In some embodiments, $0.0005 < e1 < 0.001$, $0.0005 < e2 < 0.002$.

In these embodiments, the doping amounts of N and F are within further appropriate ranges, being conducive to enhancing the electrochemical performances such as the rate performance and electrochemical reversibility of the composite phosphate cathode material.

In some embodiments, the composite phosphate cathode material further includes a carbon material coated on the surface of the composite phosphate, and a mass percentage of the carbon material in the composite phosphate cathode material is in a range from 1.6% to 5%.

For example, the mass percentage of the carbon material in the composite phosphate cathode material can be 1.6%, 1.8%, 2%, 2.2%, 2.5%, 2.8%, 3%, 3.2%, 3.5%, 3.8%, 4%, 4.2%, 4.5%, etc.

In these embodiments, the appropriate amounts of the doping metals in the composite phosphate function to catalyze the graphitization of the appropriate amounts of the surface carbon layer to form a high-quality carbon layer. The resulting carbon material layer has a loose porous structure and an appropriate proportion in the composite phosphate cathode material, which enhances the electron conductivity of the composite phosphate cathode material while avoiding a negative effect on the compaction density of the composite phosphate cathode material.

It can be understood that an excessive amount of carbon leads to the formation of an excessive amount of loose porous carbon layer on the surface of the composite phosphate, which reduces the compaction density of the composite phosphate cathode material. Conversely, an insufficient amount of carbon results in poor electron conductivity of NFPP, which reduces the capacity of the composite phosphate cathode material.

In some embodiments, the mass percentage of the carbon material in the composite phosphate cathode material is in a range from 1.6% to 3.5%. In these embodiments, the composite phosphate cathode material exhibits improved electron conductivity.

In the technical solution of the present disclosure, the composite phosphate cathode material has an appropriate compaction density and a relatively low powder resistivity. In some embodiments, the compaction density of the composite phosphate cathode material is in a range from 1.99 $g/cm^3$ to 2.15 $g/cm^3$, and the powder resistivity of the composite phosphate cathode material is in a range from 3900 $\Omega \cdot cm$ to 58700 $\Omega \cdot cm$.

For example, the compaction density of the composite phosphate cathode material is 1.99$g/cm^3$, 2$g/cm^3$, 2.01$g/cm^3$, 2.02$g/cm^3$, 2.04$g/cm^3$, 2.05$g/cm^3$, 2.06$g/cm^3$, 2.07$g/cm^3$, 2.09$g/cm^3$, 2.1$g/cm^3$, 2.11$g/cm^3$, 2.12$g/cm^3$, 2.13$g/cm^3$, 2.14$g/cm^3$, 2.15$g/cm^3$, etc.; the powder resistivity of the composite phosphate cathode material is 3900$\Omega \cdot cm$, 4000$\Omega \cdot cm$, 6000$\Omega \cdot cm$, 8000$\Omega \cdot cm$, 10000$\Omega \cdot cm$, 12500$\Omega \cdot cm$, 15000$\Omega \cdot cm$, 19000$\Omega \cdot cm$, 20000$\Omega \cdot cm$, 20300$\Omega \cdot cm$, 23500$\Omega \cdot cm$, 25000$\Omega \cdot cm$, 28000$\Omega \cdot cm$, 30000$\Omega \cdot cm$, 30400$\Omega \cdot cm$, 31100$\Omega \cdot cm$, 31200$\Omega \cdot cm$, 33300$\Omega \cdot cm$,

34400Ω·cm, 35600Ω·cm, 35800Ω·cm, 37900Ω·cm, 39800Ω·cm, 40000Ω·cm, 41400Ω·cm, 43100Ω·cm, 43200Ω·cm, 43900Ω·cm, 44000Ω·cm, 44500Ω·cm, 45400Ω·cm, 50000Ω·cm, 55000Ω·cm, 58700Ω·cm, etc.

In the technical solution of the present disclosure, a battery including the above-described composite phosphate cathode material exhibits a high charge specific capacity, a high discharge specific capacity and a high efficiency, indicating good electrochemical performances and high practical capacity. Additionally, the battery also exhibits a high capacity retention, indicating long cycle life and excellent stability.

In some embodiments, at a rate of 0.2 C, the charge specific capacity of the battery is in a range from 104.76 mAh/g to 107.06 mAh/g, and the discharge specific capacity of the battery is in a range from 100.87 mAh/g to 105.84 mAh/g.

In some embodiments, the capacity retention of the battery is in a range from 95.88% to 97.6% after 1000 cycles at a rate of 1C.

In a second aspect, an embodiment of the present disclosure provides a method for preparing a composite phosphate cathode material, including the following steps:

weighing and mixing metal sources and non-metal sources for preparing the composite phosphate cathode material to obtain a mixture, wherein a molar ratio of sodium to phosphorus is in a range from 1:1 to 1.02:1;
dispersing the mixture in a solvent to obtain a first slurry;
grinding the first slurry to obtain a second slurry;
drying and then sintering the second slurry to obtain the composite phosphate cathode material;
wherein the composite phosphate is represented by a general formula (I):

$$Na_4Fe_{(2.91-a-b-c-d)}Mn_aTi_bNi_cCu_d(PO_4)_2(P_2O_7)M_e \qquad (I),$$

where M is N, F, or a combination thereof, $0<a<0.2$, $0<b<0.05$, $0<c<0.04$, $0<d<0.05$, $0.05<a+b+c+d<0.2$, and $0\leq e<0.01$.

In the general formula (I), the values of a, b, c, d, and e can refer to the description for the first aspect of the present disclosure. In the technical solution of the embodiment of the present disclosure, the composite phosphate cathode material is prepared using a solid-state reaction method, which simplifies the preparation process and does not require complex equipment, and thus is conducive to reducing the overall production cost. The prepared composite phosphate cathode material possesses good crystallinity and crystal structure, and has a high thermal stability, which is conducive to improving the cycling performance and efficiency of the battery. In the preparation method, by doping suitable proportions of manganese, titanium, nickel, and copper elements into sodium iron phosphate-pyrophosphate to prepare the composite phosphate cathode material, the band gap of the composite phosphate cathode material is effectively reduced, and the number of active sites for $Na^+$ diffusion is increased, thereby improving the cycle life and other electrochemical performances of the composite phosphate cathode material. Additionally, in the composite phosphate cathode material, the doping amount of each element is within an appropriate range, enhancing the crystal structure of NFPP while ensuring good integration of the doping elements with NFPP crystals, thus minimizing the formation of impurity phases.

In the technical solution of the embodiment of the present disclosure, the molar ratio of sodium to phosphorus in the mixture is in a range from 1:1 to 1.02:1, and further can be in a range from 1.01:1 to 1.0125:1.

For example, the molar ratio of sodium to phosphorus can be 1:1, 1.001:1, 1.002:1, 1.003:1, 1.004:1, 1.005:1, 1.006:1, 1.007:1, 1.008:1, 1.009:1, 1.01:1, etc.

In the technical solution of the embodiment of the present disclosure, the first slurry is ground to obtain the second slurry. The grinding can be performed using a suitable method known in the art, such as ball milling. The ball milling machine can be a planetary ball mill.

In some embodiments, particles in the second slurry have a D50 particle size in a range from 0.2 μm to 1 μm and a D100 particle size smaller than or equal to 10 μm. The D50 particle size refers to a corresponding particle size when the cumulative particle size distribution of a sample reaches 50%, meaning that 50% of the particles are larger than this particle size while 50% of the particles are smaller than this particle size. D100 refers to a corresponding particle size when the cumulative particle size distribution of a sample reaches 100%.

In these embodiments, by controlling the particle size of the solid particles in the second slurry within an appropriate range, the compaction density of the composite phosphate cathode material can be improved while the specific surface area of the particles is not over small, avoiding adversely affecting ion migration and melting during the sintering process, and ensuring successful formation of the NFPP crystal phase, thereby enhancing the energy density and sodium ion transport efficiency of the battery.

It can be understood that if the particle size of the solid particles in the second slurry is too small, for instance, if the D50 particle size is smaller than 0.2 μm, the particles tend to be aggregated, leading to the formation of aggregates of the doping elements within the material, which becomes barriers to electron transport. In addition, the particle size of the composite phosphate cathode material is also too small, which lowers the compaction density and, consequently, reduces the energy density of the battery. Conversely, if the particle size of the solid particles in the second slurry is too large, for instance, if the D50 particle size is larger than 1 μm, the grinding is insufficient, the mixing of the components is non-uniform, and the specific surface area of the components is too small, which are detrimental to ion migration and melting during the sintering process, thus hindering the formation of the NFPP crystal phase, reducing sodium ion transport efficiency in the obtained composite phosphate cathode material.

For example, the D50 particle size of the particles in the second slurry can be 0.2 μm, 0.3 μm, 0.4 μm, 0.5 μm, 0.6 μm, 0.7 μm, 0.8 μm, 0.9 μm, 1 μm, etc.

In some embodiments, the D50 particle size of the particles in the second slurry is in a range from 0.4 μm to 1 μm, allowing the composite phosphate cathode material to have improved sodium ion transport efficiency and increased energy density.

In some embodiments, the sintering is performed at a sintering temperature of 520 °C to 650 °C for a sintering time of 7 h to 14 h;

For example, the sintering temperature can be 520°C, 530°C, 540°C, 550°C, 560°C, 570°C, 580°C, 590°C, 600°C, 610°C, 620°C, 630°C, 640°C, 650°C, etc.; the sintering time can be 7 h, 8 h, 9 h, 10 h, 11 h, 12 h, 13 h, 14 h, etc.

In these embodiments, by controlling the sintering temperature and sintering time within appropriate ranges, the crystal particle size and specific surface area of the formed composite phosphate can be controlled within appropriate ranges, allowing normal growth of crystal particles, and reducing the formation of impurity phases, which further improves the compaction density and sodium ion transport efficiency of the composite phosphate cathode material.

It can be understood that if the sintering temperature is too low or the sintering time is too short, the resulting composite phosphate may have a small crystal particle size, which is detrimental to increasing the compaction density of the composite phosphate cathode material. Conversely, if the sintering temperature is too high or the sintering time is too long, the crystal particle of composite phosphate grows overlarge, resulting in extended pathways of sodium ion transport, reduced efficiency, and the formation of potential impurity phases that lower the capacity.

Additionally, in these embodiments, the appropriate sintering temperature and time facilitate the complete graphitization of the organic carbon source which is conducive to improving the electron conductivity of the composite phosphate cathode material.

It can be understood that if the sintering temperature is too low or the sintering time is too short, the carbonization degree of the organic carbon source may be relatively low, leading to insufficient graphitization of the carbon layer, which is unfavorable for enhancing the electron conductivity of the composite phosphate cathode material.

In some embodiments, the metal sources include a sodium source, an iron source, a manganese source, a titanium source, a nickel source, and a copper source, and the non-metal sources include a carbon source and a phosphorus source.

In some embodiments, the non-metal sources further include a nitrogen source, a fluorine source, or a combination thereof.

In some embodiments, the sodium source is selected from the group consisting of sodium phosphate, sodium monohydrogen phosphate, sodium dihydrogen phosphate, and any combination thereof; the iron source is selected from the group consisting of ferric phosphate, ferrous monohydrogen phosphate, ferrous oxalate, and any combination thereof; the manganese source is selected the group consisting of manganese carbonate, manganese acetate, manganese oxalate, manganese dioxide, trimanganese tetroxide, and any combination thereof; the titanium source is selected from the group consisting of titanium oxide, titanium tetraethoxide, titanium isopropoxide, and any combination thereof; the nickel source is selected from the group consisting of nickel carbonate, nickel acetate, nickel oxalate, nickel oxide, and any combination thereof; the copper source is selected from the group consisting of copper acetate, copper oxalate, copper citrate, copper oxide, and any combination thereof.

In some embodiments, the carbon source is selected from the group consisting of polyethylene glycol, glucose, citric acid, sucrose, starch, and any combination thereof; the phosphorus source is selected from the group consisting of sodium dihydrogen phosphate dihydrate, disodium hydrogen phosphate, ammonium dihydrogen phosphate, diammonium hydrogen phosphate, and any combination thereof.

In some embodiments, the nitrogen source is selected from the group consisting of urea, polyvinyl pyrrolidone, dopamine, melamine, and any combination thereof; the fluorine source is selected from the group consisting of sodium fluoride, ammonium fluoride, manganese fluoride, and any combination thereof.

The materials for each metal source and non-metal source are readily available, cost-effective, and chemically stable, facilitating the preparation of the composite phosphate cathode material with controllable doping ratios.

In a third aspect, an embodiment of the present disclosure provides a cathode plate including the above-described composite phosphate cathode material.

In this embodiment, the cathode plate includes the above-described composite phosphate cathode material, thus having a relatively high practical capacity, an improved cycling performance, and an improved rate performance.

In a fourth aspect, an embodiment of the present disclosure provides a secondary battery including the above-described cathode plate.

In this embodiment, the secondary battery includes the above-described cathode plate, thus having a relatively high practical capacity, an improved cycling performance, and an improved rate performance.

In a fifth aspect, an embodiment of the present disclosure provides an electrical device, such as a vehicle, including the above-described cathode plate or secondary battery, such as a battery.

In this embodiment, the electrical device includes the above-described cathode plate or secondary battery, thus having a relatively high practical capacity, an improved cycling performance, and an improved rate performance.

The embodiments of the present disclosure will be described in detail below. It should be understood that the embodiments described below are exemplary, and are only intended to explain the present disclosure rather than being construed as limitation to the present disclosure. Where specific techniques or conditions are not indicated in the examples, the procedures shall be carried out in accordance with the techniques or conditions described in the literatures in the field or in accordance with the product specification. The reagents or instruments for which no manufacturers are noted are all common products commercially available from the market.

I. Preparation Methods

1. Preparation of Composite Phosphate Cathode Materials

1.1 Preparation of $Na_4Fe_{(2.91-a-b-c-d)}Mn_aTi_bNi_cCu_d(PO_4)_2(P_2O_7)$ type composite phosphate cathode materials

Example 1

The present example provides a composite phosphate cathode material, which is prepared by the following steps: Metal and non-metal sources except the carbon source are weighed according to the stoichiometric proportions corresponding to Example 1 in Table 1 and added into water to form a solution. The molar amount of the weighed sodium source exceeds the amount specified in Table 1 by 1%. All other sources are weighed exactly according to the amounts specified in Table 1. The sodium source is sodium phosphate, the iron source is ferric phosphate, the manganese source is manganese carbonate, the titanium source is titanium oxide, the nickel source is nickel carbonate, the copper source is copper acetate, and the phosphorus source is sodium dihydrogen phosphate dihydrate. An appropriate amount of polyethylene glycol is then weighed as the carbon source, mixed with the solution, and stirred and dispersed to obtain a first slurry. The first slurry is ground to obtain a second slurry. The solid particles in the second slurry have a D50 particle size of 0.8 $\mu$m and a D100 particle size of 5 $\mu$m. The second slurry is spray dried to obtain a dry powder, which is then sintered in an inert atmosphere at a temperature of 600°C for 10 h, yielding a composite phosphate cathode material S1 with a carbon content of 2%.

Example 2

The present example provides a composite phosphate cathode material (composite phosphate cathode material S2), which is prepared by a method same or similar to that in Example 1, with the following differences: The metal and non-metal sources except the carbon source are weighed according to the stoichiometric proportions corresponding to Example 2 in Table 1, where the sodium source is sodium monohydrogen phosphate, the iron source is ferrous monohydrogen phosphate, the manganese source is manganese acetate, the titanium source is titanium tetraethoxide, the nickel source is nickel acetate, the copper source is copper oxalate, and the phosphorus source is disodium hydrogen phosphate.

Example 3

The present example provides a composite phosphate cathode material (composite phosphate cathode material S3), which is prepared by a method same or similar to that in Example 1, with the following differences: The metal and non-metal sources except the carbon source are weighed according to the stoichiometric proportions corresponding to Example 3 in Table 1, where the sodium source is sodium dihydrogen phosphate, the iron source is ferrous oxalate, the manganese source is manganese oxalate, the titanium source is titanium isopropoxide, the nickel source is nickel oxalate, the copper source is copper citrate, and the phosphorus source is ammonium dihydrogen phosphate.

Example 4

The present example provides a composite phosphate cathode material (composite phosphate cathode material S4), which is prepared by a method same or similar to that in Example 1, with the following differences: The metal and non-metal sources except the carbon source are weighed according to the stoichiometric proportions corresponding to Example 4 in Table 1, where the sodium source is sodium phosphate, the iron source is ferric phosphate, the manganese source is manganese dioxide, the titanium source is titanium oxide, the nickel source is nickel oxide, the copper source is copper oxide, and the phosphorus source is diammonium hydrogen phosphate.

Example 5

The present example provides a composite phosphate cathode material (composite phosphate cathode material S5), which is prepared by a method same or similar to that in Example 1, with the following differences: The metal and non-metal sources except the carbon source are weighed according to the stoichiometric proportions corresponding to Example 5 in Table 1, where the sodium source is sodium phosphate, the iron source is ferric phosphate, the manganese source is trimanganese tetroxide, the titanium source is titanium isopropoxide, the nickel source is nickel carbonate, the copper source is copper acetate.

Example 6

The present example provides a composite phosphate cathode material (composite phosphate cathode material S6), which is prepared by a method same or similar to that in Example 1, with the following differences: The metal and non-metal sources except the carbon source are weighed according to the stoichiometric proportions corresponding to Example 6 in Table 1, the materials are the same as those in Example 1 but the carbon source is glucose.

Example 7

The present example provides a composite phosphate cathode material (composite phosphate cathode material S7), which is prepared by a method same or similar to that in Example 1, with the following differences: The metal and non-metal sources except the carbon source are weighed according to the stoichiometric proportions corresponding to Example 7 in Table 1, the materials are the same as those in Example 1 but the carbon source is citric acid.

Example 8

The present example provides a composite phosphate cathode material (composite phosphate cathode material S8), which is prepared by a method same or similar to that in Example 1, with the following differences: The metal and non-metal sources except the carbon source are weighed according to the stoichiometric proportions corresponding to Example 8 in Table 1, the materials are the same as those in Example 1 but the carbon source is sucrose.

Example 9

The present example provides a composite phosphate cathode material (composite phosphate cathode material S9), which is prepared by a method same or similar to that in Example 1, with the following differences: The metal and non-metal sources except the carbon source are weighed according to the stoichiometric proportions corresponding to Example 9 in Table 1, the materials are the same as those in Example 1 but the carbon source is starch.

Example 10

The present example provides a composite phosphate cathode material (composite phosphate cathode material S10), which is prepared by a method same or similar to that in Example 1, with the following differences: The metal and non-metal sources except the carbon source are weighed according to the stoichiometric proportions corresponding to Example 10 in Table 1, the materials are the same as those in Example 1, and the amount of the carbon source makes the carbon content in the composite phosphate cathode material S10 equal to 1.6%.

Example 11

The present example provides a composite phosphate cathode material (composite phosphate cathode material S11), which is prepared by a method same or similar to that in Example 1, with the following differences: The metal and non-metal sources except the carbon source are weighed according to the stoichiometric proportions corresponding to Example 11 in Table 1, the materials are the same as those in Example 1, and the amount of the carbon source makes the carbon content in the composite phosphate cathode material S10 equal to 3.5%.

Example 12

The present example provides a composite phosphate cathode material (composite phosphate cathode material S12), which is prepared by a method same or similar to that in Example 1, with the following differences: When the first slurry is obtained, the first slurry is ground to obtain a second slurry whose solid particles have a D50 particle size of 1 $\mu$m and a D100 particle size of 8 $\mu$m.

Example 13

The present example provides a composite phosphate cathode material (composite phosphate cathode material S13), which is prepared by a method same or similar to that in Example 1, with the following differences: When the first slurry is obtained, the first slurry is ground to obtain a second slurry whose solid particles have a D50 particle size of 0.4 $\mu$m and a D100 particle size of 3 $\mu$m.

Example 14

The present example provides a composite phosphate cathode material (composite phosphate cathode material S14), which is prepared by a method same or similar to that in Example 1, with the following differences: When the first slurry is obtained, the first slurry is ground to obtain a second slurry whose solid particles have a D50 particle size of 0.6 $\mu$m and a D100 particle size of 2 $\mu$m.

Example 15

The present example provides a composite phosphate cathode material (composite phosphate cathode material S15), which is prepared by a method same or similar to that in Example 1, with the following differences: When the first slurry is obtained, the first slurry is ground to obtain a second slurry whose solid particles have a D50 particle size of 0.6 $\mu$m and a D100 particle size of 10 $\mu$m.

Example 16

The present example provides a composite phosphate cathode material (composite phosphate cathode material S16), which is prepared by a method same or similar to that in Example 1, with the following differences: The amount of the carbon source makes the carbon content in the composite phosphate cathode material S30 equal to 1.6%.

Example 17

The present example provides a composite phosphate cathode material (composite phosphate cathode material S17), which is prepared by a method same or similar to that in Example 1, with the following differences: The amount of the carbon source makes the carbon content in the composite phosphate cathode material S30 equal to 2.5%.

Example 18

The present example provides a composite phosphate cathode material (composite phosphate cathode material S18), which is prepared by a method same or similar to that in Example 1, with the following differences: The carbon source is sucrose.

Example 19

The present example provides a composite phosphate cathode material (composite phosphate cathode material S19), which is prepared by a method same or similar to that in Example 1, with the following differences: The dry powder is sintered in the inert atmosphere at a temperature of 520°C.

Example 20

The present example provides a composite phosphate cathode material (composite phosphate cathode material S20), which is prepared by a method same or similar to that in Example 1, with the following differences: The dry powder is sintered in the inert atmosphere at a temperature of 650°C.

Example 21

The present example provides a composite phosphate cathode material (composite phosphate cathode material S21), which is prepared by a method same or similar to that in Example 1, with the following differences: The dry powder is sintered in the inert atmosphere for 7 h.

Example 22

The present example provides a composite phosphate cathode material (composite phosphate cathode material S22), which is prepared by a method same or similar to that in Example 1, with the following differences: The dry powder is sintered in the inert atmosphere for 14 h.

Comparative Example 1

The present comparative example provides a composite phosphate cathode material (composite phosphate cathode material D1), which is prepared by a method same or similar to that in Example 1, with the following differences: The metal and non-metal sources except the carbon source are weighed according to the stoichiometric proportions corresponding to Comparative Example 1 in Table 1, and the materials are the same as those in Example 1.

Comparative Example 2

The present comparative example provides a composite phosphate cathode material (composite phosphate cathode material D2), which is prepared by a method same or similar to that in Example 1, with the following differences: The metal and non-metal sources except the carbon source are weighed according to the stoichiometric proportions corresponding to Comparative Example 2 in Table 1, and the materials are the same as those in Example 1.

Comparative Example 3

The present comparative example provides a composite phosphate cathode material (composite phosphate cathode material D3), which is prepared by a method same or similar to that in Example 1, with the following differences: The metal and non-metal sources except the carbon source are weighed according to the stoichiometric proportions corresponding to Comparative Example 3 in Table 1, and the materials are the same as those in Example 1.

Comparative Example 4

The present comparative example provides a composite phosphate cathode material (composite phosphate cathode material D4), which is prepared by a method same or similar to that in Example 1, with the following differences: The metal and non-metal sources except the carbon source are weighed according to the stoichiometric proportions corresponding to Comparative Example 4 in Table 1, and the materials are the same as those in Example 1.

Comparative Example 5

The present comparative example provides a composite phosphate cathode material (composite phosphate cathode material D5), which is prepared by a method same or similar to that in Example 1, with the following differences: The metal and non-metal sources except the carbon source are weighed according to the stoichiometric proportions corresponding to Comparative Example 5 in Table 1, and the materials are the same as those in Example 1.

Comparative Example 6

The present comparative example provides a composite phosphate cathode material (composite phosphate cathode material D6), which is prepared by a method same or similar to that in Example 1, with the following differences: The metal and non-metal sources except the carbon source are weighed according to the stoichiometric proportions corresponding to Comparative Example 6 in Table 1, and the materials are the same as those in Example 1.

Comparative Example 7

The present comparative example provides a composite phosphate cathode material (composite phosphate cathode material D7), which is prepared by a method same or similar to that in Example 1, with the following differences:

The metal and non-metal sources except the carbon source are weighed according to the stoichiometric proportions corresponding to Comparative Example 7 in Table 1, and the materials are the same as those in Example 1.

Comparative Example 8

The present comparative example provides a composite phosphate cathode material (composite phosphate cathode material D8), which is prepared by a method same or similar to that in Example 1, with the following differences: The metal and non-metal sources except the carbon source are weighed according to the stoichiometric proportions corresponding to Comparative Example 8 in Table 1, and the materials are the same as those in Example 1.

Comparative Example 9

The present comparative example provides a composite phosphate cathode material (composite phosphate cathode material D9), which is prepared by a method same or similar to that in Example 1, with the following differences: The metal and non-metal sources except the carbon source are weighed according to the stoichiometric proportions corresponding to Comparative Example 9 in Table 1, and the materials are the same as those in Example 1.

Comparative Example 10

The present comparative example provides a composite phosphate cathode material (composite phosphate cathode material D10), which is prepared by a method same or similar to that in Example 1, with the following differences: The metal and non-metal sources except the carbon source are weighed according to the stoichiometric proportions corresponding to Comparative Example 10 in Table 1, and the materials are the same as those in Example 1.

Comparative Example 11

The present comparative example provides a composite phosphate cathode material (composite phosphate cathode material D11), which is prepared by a method same or similar to that in Example 1, with the following differences: The metal and non-metal sources except the carbon source are weighed according to the stoichiometric proportions corresponding to Comparative Example 11 in Table 1, and the materials are the same as those in Example 1.

Comparative Example 12

The present comparative example provides a composite phosphate cathode material (composite phosphate cathode material D12), which is prepared by a method same or similar to that in Example 1, with the following differences: After the grinding, the solid particles in the first slurry have a D50 particle size of 0.2 $\mu$m.

Comparative Example 13

The present comparative example provides a composite phosphate cathode material (composite phosphate cathode material D13), which is prepared by a method same or similar to that in Example 1, with the following differences: After the grinding, the solid particles in the first slurry have a D50 particle size of 5 $\mu$m.

Comparative Example 14

The present comparative example provides a composite phosphate cathode material (composite phosphate cathode material D14), which is prepared by a method same or similar to that in Example 1, with the following differences: After the grinding, the solid particles in the first slurry have a D100 particle size of 20 $\mu$m.

Comparative Example 15

The present comparative example provides a composite phosphate cathode material (composite phosphate cathode material D15), which is prepared by a method same or similar to that in Example 1, with the following differences: The amount of the carbon source is insufficient, such that the carbon content in the product is 1%.

Comparative Example 16

The present comparative example provides a composite phosphate cathode material (composite phosphate cathode material D16), which is prepared by a method same or similar to that in Example 1, with the following differences: The amount of the carbon source is excessive, such that the carbon content in the composite phosphate cathode material D17 is 5%.

Comparative Example 17

The present comparative example provides a composite phosphate cathode material (composite phosphate cathode material D17), which is prepared by a method same or similar to that in Example 1, with the following differences: The sintering temperature is 400°C.

Comparative Example 18

The present comparative example provides a composite phosphate cathode material (composite phosphate cathode material D18), which is prepared by a method same or similar to that in Example 1, with the following differences: The sintering temperature is 800°C.

Comparative Example 19

The present comparative example provides a composite phosphate cathode material (composite phosphate cathode material D19), which is prepared by a method same or similar to that in Example 1, with the following differences: The sintering time is 5 h.

Comparative Example 20

The present comparative example provides a composite phosphate cathode material (composite phosphate cathode material D20), which is prepared by a method same or similar to that in Example 1, with the following differences: The sintering time is 20 h.

Table 1

| Element | Na | Fe | Mn | Ti | Ni | Cu | $PO_4$ | $P_2O_7$ | b/a | c/a | d/a |
|---|---|---|---|---|---|---|---|---|---|---|---|
| Example 1 | 4 | 2.753 | 0.15 | 0.003 | 0.002 | 0.002 | 2 | 1 | 0.02 | 0.0133 | 0.0133 |
| Example 2 | 4 | 2.723 | 0.18 | 0.003 | 0.002 | 0.002 | 2 | 1 | 0.0167 | 0.0111 | 0.0111 |
| Example 3 | 4 | 2.773 | 0.13 | 0.003 | 0.002 | 0.002 | 2 | 1 | 0.0231 | 0.0154 | 0.0154 |
| Example 4 | 4 | 2.756 | 0.15 | 0.002 | 0.001 | 0.001 | 2 | 1 | 0.0133 | 0.0067 | 0.0067 |
| Example 5 | 4 | 2.726 | 0.18 | 0.002 | 0.001 | 0.001 | 2 | 1 | 0.0111 | 0.0056 | 0.0056 |
| Example 6 | 4 | 2.776 | 0.13 | 0.002 | 0.001 | 0.001 | 2 | 1 | 0.0154 | 0.0077 | 0.0077 |
| Example 7 | 4 | 2.806 | 0.1 | 0.002 | 0.001 | 0.001 | 2 | 1 | 0.02 | 0.01 | 0.01 |
| Example 8 | 4 | 2.755 | 0.15 | 0.001 | 0.002 | 0.002 | 2 | 1 | 0.0067 | 0.0133 | 0.0133 |
| Example 9 | 4 | 2.727 | 0.18 | 0.001 | 0.001 | 0.001 | 2 | 1 | 0.0056 | 0.0056 | 0.0056 |
| Example 10 | 4 | 2.808 | 0.1 | 0.001 | 0.0005 | 0.0005 | 2 | 1 | 0.01 | 0.005 | 0.005 |
| Example 11 | 4 | 2.7585 | 0.15 | 0.0005 | 0.0005 | 0.0005 | 2 | 1 | 0.0033 | 0.0033 | 0.0033 |
| Comparative Example 1 | 4 | 2.91 | 0 | 0 | 0 | 0 | 2 | 1 | / | / | / |
| Comparative Example 2 | 4 | 2.803 | 0.1 | 0.003 | 0.002 | 0.002 | 2 | 1 | 0.03 | 0.02 | 0.02 |
| Comparative Example 3 | 4 | 2.7475 | 0.15 | 0.0045 | 0.0035 | 0.0045 | 2 | 1 | 0.03 | 0.0233 | 0.03 |
| Comparative Example 4 | 4 | 2.7675 | 0.13 | 0.0045 | 0.0035 | 0.0045 | 2 | 1 | 0.0346 | 0.0269 | 0.0346 |
| Comparative Example 5 | 4 | 2.7975 | 0.1 | 0.0045 | 0.0035 | 0.0045 | 2 | 1 | 0.045 | 0.035 | 0.045 |

(continued)

| Element | Na | Fe | Mn | Ti | Ni | Cu | PO$_4$ | P$_2$O$_7$ | b/a | c/a | d/a |
|---|---|---|---|---|---|---|---|---|---|---|---|
| Comparative Example 6 | 4 | 2.7674 | 0.13 | 0.0046 | 0.0035 | 0.0045 | 2 | 1 | 0.0354 | 0.0269 | 0.0346 |
| Comparative Example 7 | 4 | 2.7594 | 0.15 | 0.0002 | 0.0002 | 0.0002 | 2 | 1 | 0.0013 | 0.0013 | 0.0013 |
| Comparative Example 8 | 4 | 2.73 | 0.18 | 0 | 0 | 0 | 2 | 1 | 0 | 0 | 0 |
| Comparative Example 9 | 4 | 2.9055 | 0 | 0.0045 | 0 | 0 | 2 | 1 | / | / | / |
| Comparative Example 10 | 4 | 2.9065 | 0 | 0 | 0.0035 | 0 | 2 | 1 | / | / | / |
| Comparative Example 11 | 4 | 2.9055 | 0 | 0 | 0 | 0.0045 | 2 | 1 | / | / | / |

The values in Table 1 are the stoichiometric proportions of elements in each example or comparative example; "0" indicates that the element is not added in that example or comparative example, while "/" indicates that the ratio is not calculated when an element as the denominator does not exist.

1.2 Preparation of Na$_4$Fe$_{(2.91-a-b-c-d)}$Mn$_a$Ti$_b$Ni$_c$Cu$_d$(PO$_4$)$_2$(P$_2$O$_7$)N$_{e1}$F$_{e2}$ type composite phosphate cathode materials

Example 23

The present example provides a composite phosphate cathode material, which is prepared by the following steps:

Metal and non-metal sources except the carbon source are weighed according to the stoichiometric proportions corresponding to Example 23 in Table 2 and added into water to form a solution. The molar amount of the weighed sodium source exceeds the amount specified in Table 1 by 1%. All other sources are weighed exactly according to the amounts specified in Table 1. The sodium source is sodium monohydrogen phosphate, the iron source is ferrous monohydrogen phosphate, the manganese source is manganese acetate, the titanium source is titanium tetraethoxide, the nickel source is nickel acetate, the copper source is copper oxalate, the phosphorus source is disodium hydrogen phosphate, the nitrogen source is polyvinyl pyrrolidone, and the fluorine source is sodium fluoride. An appropriate amount of polyethylene glycol is then weighed as the carbon source, mixed with the solution, and stirred and dispersed to obtain a first slurry. The first slurry is ground to obtain a second slurry. The solid particles in the second slurry have a D50 particle size of 0.8 $\mu$m and a D100 particle size of 5 $\mu$m. The second slurry is spray dried to obtain a dry powder, which is then sintered in an inert atmosphere at a temperature of 600°C for 10 h, yielding a composite phosphate cathode material S23. The carbon content in the composite phosphate cathode material S23 is 2%.

Example 24

The present example provides a composite phosphate cathode material (composite phosphate cathode material S24), which is prepared by a method same or similar to that in Example 23, with the following differences: The metal and non-metal sources except the carbon source are weighed according to the stoichiometric proportions corresponding to Example 24 in Table 2, and the materials are the same as those in Example 23.

Example 25

The present example provides a composite phosphate cathode material (composite phosphate cathode material S25), which is prepared by a method same or similar to that in Example 23, with the following differences: The metal and non-metal sources except the carbon source are weighed according to the stoichiometric proportions corresponding to Example 25 in Table 2, and the materials are the same as those in Example 23.

Example 26

The present example provides a composite phosphate cathode material (composite phosphate cathode material S26), which is prepared by a method same or similar to that in Example 23, with the following differences: The metal and non-metal sources except the carbon source are weighed according to the stoichiometric proportions corresponding to Example 26 in Table 2, and the materials are the same as those in Example 23.

Example 27

The present example provides a composite phosphate cathode material (composite phosphate cathode material S27), which is prepared by a method same or similar to that in Example 23, with the following differences: The metal and non-metal sources except the carbon source are weighed according to the stoichiometric proportions corresponding to Example 27 in Table 2, and the materials are the same as those in Example 23.

Example 28

The present example provides a composite phosphate cathode material (composite phosphate cathode material S28), which is prepared by a method same or similar to that in Example 23, with the following differences: The metal and non-metal sources except the carbon source are weighed according to the stoichiometric proportions corresponding to Example 28 in Table 2, and the materials are the same as those in Example 23.

Example 29

The present example provides a composite phosphate cathode material (composite phosphate cathode material S29), which is prepared by a method same or similar to that in Example 23, with the following differences: The metal and non-metal sources except the carbon source are weighed according to the stoichiometric proportions corresponding to Example 29 in Table 2, and the materials are the same as those in Example 23.

Example 30

The present example provides a composite phosphate cathode material (composite phosphate cathode material S30), which is prepared by a method same or similar to that in Example 23, with the following differences: The metal and non-metal sources except the carbon source are weighed according to the stoichiometric proportions corresponding to Example 30 in Table 2, and the materials are the same as those in Example 23.

Example 31

The present example provides a composite phosphate cathode material (composite phosphate cathode material S31), which is prepared by a method same or similar to that in Example 23, with the following differences: The metal and non-metal sources except the carbon source are weighed according to the stoichiometric proportions corresponding to Example 31 in Table 2, and the materials are the same as those in Example 23.

Example 32

The present example provides a composite phosphate cathode material (composite phosphate cathode material S32), which is prepared by a method same or similar to that in Example 23, with the following differences: The metal and non-metal sources except the carbon source are weighed according to the stoichiometric proportions corresponding to Example 32 in Table 2, and the materials are the same as those in Example 23.

Example 33

The present example provides a composite phosphate cathode material (composite phosphate cathode material S33), which is prepared by a method same or similar to that in Example 23, with the following differences: The metal and non-metal sources except the carbon source are weighed according to the stoichiometric proportions corresponding to Example 33 in Table 2, and the materials are the same as those in Example 23.

Example 34

The present example provides a composite phosphate cathode material (composite phosphate cathode material S34), which is prepared by a method same or similar to that in Example 23, with the following differences: The metal and non-metal sources except the carbon source are weighed according to the stoichiometric proportions corresponding to Example 34 in Table 2, and the materials are the same as those in Example 23.

Example 35

The present example provides a composite phosphate cathode material (composite phosphate cathode material S35), which is prepared by a method same or similar to that in Example 23, with the following differences: The metal and non-metal sources except the carbon source are weighed according to the stoichiometric proportions corresponding to Example 35 in Table 2, and the materials are the same as those in Example 23.

Example 36

The present example provides a composite phosphate cathode material (composite phosphate cathode material S36), which is prepared by a method same or similar to that in Example 23, with the following differences: The metal and non-metal sources except the carbon source are weighed according to the stoichiometric proportions corresponding to Example 36 in Table 2, and the materials are the same as those in Example 23.

Table 2

| | Na | Fe | Mn | Ti | Ni | Cu | $PO_4$ | $P_2O_7$ | N | F |
|---|---|---|---|---|---|---|---|---|---|---|
| Example 23 | 4 | 2.756 | 0.15 | 0.002 | 0.001 | 0.001 | 2 | 1 | 0.0005 | 0.0005 |
| Example 24 | 4 | 2.756 | 0.15 | 0.002 | 0.001 | 0.001 | 2 | 1 | 0.0005 | 0.001 |
| Example 25 | 4 | 2.756 | 0.15 | 0.002 | 0.001 | 0.001 | 2 | 1 | 0.0005 | 0.002 |
| Example 26 | 4 | 2.756 | 0.15 | 0.002 | 0.001 | 0.001 | 2 | 1 | 0.0005 | 0.004 |
| Example 27 | 4 | 2.756 | 0.15 | 0.002 | 0.001 | 0.001 | 2 | 1 | 0.001 | 0.0005 |
| Example 28 | 4 | 2.756 | 0.15 | 0.002 | 0.001 | 0.001 | 2 | 1 | 0.001 | 0.001 |
| Example 29 | 4 | 2.756 | 0.15 | 0.002 | 0.001 | 0.001 | 2 | 1 | 0.001 | 0.002 |
| Example 30 | 4 | 2.756 | 0.15 | 0.002 | 0.001 | 0.001 | 2 | 1 | 0.001 | 0.004 |
| Example 31 | 4 | 2.756 | 0.15 | 0.002 | 0.001 | 0.001 | 2 | 1 | 0.003 | 0.0005 |
| Example 32 | 4 | 2.756 | 0.15 | 0.002 | 0.001 | 0.001 | 2 | 1 | 0.003 | 0.001 |
| Example 33 | 4 | 2.756 | 0.15 | 0.002 | 0.001 | 0.001 | 2 | 1 | 0.003 | 0.002 |
| Example 34 | 4 | 2.756 | 0.15 | 0.002 | 0.001 | 0.001 | 2 | 1 | 0.003 | 0.004 |
| Example 35 | 4 | 2.756 | 0.15 | 0.002 | 0.001 | 0.001 | 2 | 1 | 0 | 0.001 |
| Example 36 | 4 | 2.756 | 0.15 | 0.002 | 0.001 | 0.001 | 2 | 1 | 0.001 | 0 |

| | b/a | c/a | d/a |
|---|---|---|---|
| Example 23 | 0.0133 | 0.0067 | 0.0067 |
| Example 24 | 0.0133 | 0.0067 | 0.0067 |
| Example 25 | 0.0133 | 0.0067 | 0.0067 |
| Example 26 | 0.0133 | 0.0067 | 0.0067 |
| Example 27 | 0.0133 | 0.0067 | 0.0067 |
| Example 28 | 0.0133 | 0.0067 | 0.0067 |
| Example 29 | 0.0133 | 0.0067 | 0.0067 |
| Example 30 | 0.0133 | 0.0067 | 0.0067 |

(continued)

|  | b/a | c/a | d/a |
|---|---|---|---|
| Example 31 | 0.0133 | 0.0067 | 0.0067 |
| Example 32 | 0.0133 | 0.0067 | 0.0067 |
| Example 33 | 0.0133 | 0.0067 | 0.0067 |
| Example 34 | 0.0133 | 0.0067 | 0.0067 |
| Example 35 | 0.0133 | 0.0067 | 0.0067 |
| Example 36 | 0.0133 | 0.0067 | 0.0067 |

The values in Table 2 are the stoichiometric proportions of elements in each example; "0" indicates that the element is not added in that example.

2. Preparation of Batteries

The composite phosphate cathode materials obtained from the examples and comparative examples (S1 to S36, D1 to D20) are prepared into corresponding cathode plates (cathode plates S1 to S36, D1 to D20) using a general method as follows: The composite phosphate cathode material, conductive carbon powder, and polyvinylidene difluoride (PVDF) binder are mixed in a mass ratio of 90:5:5. The uniformly mixed materials are coated onto an aluminum foil and dried at 100°C, rolled and pressed using a roller press machine, and formed into a cathode plate with a diameter of 14 mm using a punching machine. The mass of the active material is calculated by weighing the cathode plate and subtracting the mass of the aluminum foil.

The cathode plates (cathode plates S1 to S36, D1 to D20) are dried and assembled into CR2032 coin-type half-cells (batteries S1 to S36, D1 to D20) in inert gas in an UNlab model glove box from Braun, Germany. The batteries are prepared by a general method as follows: The anode shell, sodium foil, electrolyte solution, separator, electrolyte, cathode plate, spacer, spring, and cathode shell are assembled in sequence.

II. Testing Methods

1. Testing of Properties of Composite Phosphate Cathode Materials

(1) Compaction Density: The compaction density is measured using a compaction density tester with a testing pressure of 3 tons and a pressing time of 30 seconds.
(2) Powder Resistivity: The powder resistivity of the electrode material is determined by measuring the resistance of the powder bed, and is accomplished by using a four-probe testing system in the present disclosure.

2. Testing of Battery Performances

(1) Charge Specific Capacity: The amount of charge that the electrode material can store per unit mass or volume during a charging process.
(2) Discharge Specific Capacity: The amount of charge that the electrode material can release per unit mass or volume during a discharging process.
(3) Capacity Retention after 1000 Cycles at 1C: The ratio of the remaining capacity to the initial capacity of a battery after 1000 cycles at a charge/discharge rate of 1C.
(4) Rate Performance Testing: At rates of 0.2C, 0.5C, 1C, 2C, 5C, and 10C, with one cycle at each rate.
(5) Reversibility of Electrical Performance: After the above rate performance testing, the charge specific capacity and discharge specific capacity at 0.2C of the battery are further tested.

All of the above tests are conducted using the Wuhan Blue Electric CT2001A battery testing system, with a voltage range of 2.0V to 4.0V.

III. Analysis of Test Results of Examples and Comparative Examples

(1) $Na_4Fe_{(2.91-a-b-c-d)}Mn_aTi_bNi_cCu_d(PO_4)_2(P_2O_7)$ type composite phosphate cathode materials

The compaction density and powder resistivity of the composite phosphate cathode materials S1 to S22 from Examples 1 to 22 and D1 to D20 from Comparative Examples 1 to 20 and the electrical performance and capacity retention of the corresponding batteries are firstly tested. The results are shown in Table 3.

Table 3. Compaction density and powder resistivity of the composite phosphate cathode materials corresponding to Examples 1 to 22 and Comparative Examples 1 to 20, and electrical performances, and capacity retention of the corresponding batteries.

| Corresponding examples and comparative examples | Compaction density (g/cm³) | Powder resistivity (Ω·cm) | Electrical performance of product (2-4.0V,0.2C) | | | Capacity retention at 1C after 1000 cycles (%) |
| --- | --- | --- | --- | --- | --- | --- |
| | | | Charge specific capacity (mAh/g) | Discharge specific capacity (mAh/g) | Efficiency (%) | |
| Examples 1 | 2.11 | 31200 | 106.12 | 101.51 | 95.66% | 96.12 |
| Examples 2 | 2.12 | 19000 | 105.81 | 104.81 | 99.05% | 96.04 |
| Examples 3 | 2.11 | 44000 | 104.76 | 102.6 | 97.94% | 96.71 |
| Examples 4 | 2.05 | 12500 | 107.06 | 105.84 | 98.86% | 97.6 |
| Examples 5 | 2.00 | 30400 | 105.34 | 101.35 | 96.21% | 96.14 |
| Examples 6 | 2.02 | 3900 | 105.08 | 100.87 | 95.99% | 97.15 |
| Examples 7 | 2.04 | 23500 | 105.75 | 101.7 | 96.17% | 96.53 |
| Examples 8 | 2.13 | 35800 | 106.5 | 101.15 | 94.98% | 96.46 |
| Examples 9 | 2.06 | 20300 | 105.14 | 102.53 | 97.52% | 96.3 |
| Examples 10 | 2.05 | 43900 | 105.59 | 105.47 | 99.89% | 96.13 |
| Examples 11 | 2.06 | 43200 | 106.19 | 102.74 | 96.75% | 97.53 |
| Examples 12 | 2.15 | 39800 | 105.16 | 101.24 | 96.27% | 95.97 |
| Examples 13 | 2.01 | 34400 | 106.11 | 101.32 | 95.49% | 96.09 |
| Examples 14 | 2.10 | 33300 | 105.94 | 100.99 | 95.33% | 95.93 |
| Examples 15 | 2.13 | 37900 | 105.95 | 101.3 | 95.61% | 96.03 |
| Examples 16 | 2.14 | 58700 | 105.77 | 100.89 | 95.39% | 95.93 |
| Examples 17 | 2.00 | 31100 | 106.11 | 101.28 | 95.45% | 96.22 |
| Examples 18 | 2.07 | 35600 | 106.06 | 101.05 | 95.28% | 95.96 |
| Examples 19 | 1.99 | 45400 | 105.9 | 101.4 | 95.75% | 96.02 |
| Examples 20 | 2.09 | 41400 | 105.98 | 101.07 | 95.37% | 95.98 |
| Examples 21 | 2.01 | 43100 | 106.03 | 101.07 | 95.32% | 96.12 |
| Examples 22 | 2.14 | 44500 | 106.09 | 101.08 | 95.28% | 95.88 |
| Comparative Examples 1 | 1.95 | 78000 | 99.85 | 94.56 | 94.70% | 82.5 |
| Comparative Examples 2 | 1.98 | 51200 | 100.22 | 94.2 | 93.99% | 80.78 |
| Comparative Examples 3 | 1.96 | 48300 | 101.4 | 96.33 | 95.00% | 79.2 |
| Comparative Examples 4 | 2 | 56000 | 101.24 | 95.89 | 94.72% | 81.32 |
| Comparative Examples 5 | 1.99 | 63000 | 99.78 | 96.21 | 96.42% | 76.18 |
| Comparative Examples 6 | 1.95 | 40000 | 99.39 | 94.2 | 94.78% | 79.28 |
| Comparative Examples 7 | 1.98 | 35000 | 99.69 | 94.75 | 95.04% | 82.26 |
| Comparative Examples 8 | 1.85 | 51000 | 96.37 | 93.86 | 97.40% | 82.24 |

(continued)

| Corresponding examples and comparative examples | Compaction density (g/cm³) | Powder resistivity (Ω·cm) | Electrical performance of product (2-4.0V,0.2C) | | | Capacity retention at 1C after 1000 cycles (%) |
|---|---|---|---|---|---|---|
| | | | Charge specific capacity (mAh/g) | Discharge specific capacity (mAh/g) | Efficiency (%) | |
| Comparative Examples 9 | 1.9 | 69000 | 97.78 | 94.65 | 96.80% | 86.91 |
| Comparative Examples 10 | 1.96 | 71500 | 96.81 | 92.99 | 96.05% | 76.01 |
| Comparative Examples 11 | 1.93 | 70000 | 97.09 | 94.57 | 97.40% | 79.3 |
| Comparative Examples 12 | 1.97 | 39300 | 105.11 | 100.34 | 95.46% | 95.11 |
| Comparative Examples 13 | 2.16 | 65400 | 104.44 | 99.98 | 95.73% | 93.87 |
| Comparative Examples 14 | 2.14 | 76200 | 102.57 | 97.77 | 95.32% | 90.56 |
| Comparative Examples 15 | 2.15 | 77000 | 102.22 | 96.34 | 94.25% | 85.46 |
| Comparative Examples 16 | 1.91 | 30000 | 106.11 | 100.78 | 94.98% | 95.99 |
| Comparative Examples 17 | 1.92 | 71100 | 100.34 | 92.13 | 91.82% | 84.31 |
| Comparative Examples 18 | 2.11 | 66100 | 103.23 | 99.21 | 96.11% | 93.56 |
| Comparative Examples 19 | 1.96 | 71500 | 100.52 | 97.32 | 96.82% | 90.85 |
| Comparative Examples 20 | 2.14 | 75100 | 101.89 | 92.29 | 90.58% | 89.73 |

According to Table 3, the composite phosphate cathode materials provided in the present disclosure have compaction density in a range from 1.99 g/cm³ to 2.15 g/cm³ and powder resistivity in a range from 3900 Ω•cm to 58700 Ω•cm. The compaction density is relatively high and the powder resistivity is relatively low, reflecting excellent conductivity.

The increased compaction density allows more active material to be contained within the same volume, enhancing the energy storage capacity of the battery while minimizing the volume change of the active material, thereby reducing stress in the electrode and thus improving cycle life and stability of the battery. The increased compaction density also reduces contact resistance between particles, improving electrical conductivity of the electrode and facilitating charge transfer and reaction proceeding. The low powder resistivity indicates easy electron conduction within the material, reducing resistance loss and improving charge and discharge efficiency and power performance of the battery, thus increasing discharge specific capacity and efficiency in terms of electrical performance. Moreover, regarding the capacity retention, the low resistivity can reduce heat generation during the charge and discharge process of the battery, slowing internal resistance growth and capacity fade, which contributes to improving the cycle life and capacity retention.

The batteries of the present disclosure have charge specific capacity in a range from 105.08 mAh/g to 106.5 mAh/g, discharge specific capacity in a range from 100.87 mAh/g to 105.84 mAh/g, efficiency in a range from 94.98% to 99.89%, and capacity retention in a range from 95.88% to 97.6%. The above results indicate that the cathode materials have suitable compaction density and low powder resistivity, enhancing the electrical performance and cycling retention of the batteries.

Comparative Examples 1 to 11 show significantly poorer discharge specific capacity and cycling performance compared to Examples 1 to 12, due to inappropriate doping proportions of manganese, titanium, nickel, and copper. This may attribute to the poor integration of the doping metals with the NFPP crystals during the sintering process when the doping proportions of manganese, titanium, nickel, and copper are inappropriate, resulting in impurity phases that degrade electrical performance. Additionally, the metal doping has a catalyzing function on the graphitization of the surface carbon layer during the sintering process. When the doping proportions of manganese, titanium, nickel, and copper are inappropriate, the quality of the carbon layer is adversely affected, and thus the conductivity of the cathode material and the cycling performance of the battery are adversely affected. In Examples 1 to 12, by doping appropriate proportions of manganese, titanium, nickel, and copper elements into sodium iron phosphate-pyrophosphate to prepare the composite phosphate cathode materials, the band gap of the composite phosphate cathode materials is effectively reduced, and the number of active sites for Na$^+$ diffusion is increased, thereby improving the cycle life and other electrochemical performances of the composite phosphate cathode materials. Additionally, in the composite phosphate cathode materials of the present disclosure, the doping amount of each element is within an appropriate range, enhancing the crystal structure of NFPP while ensuring good integration of the doping elements with NFPP crystals, thus minimizing the formation of impurity phases.

Compared with Examples 1 to 12, Comparative Example 12 has an over small D50 particle size of the solid particles in the second slurry, which increases the tendency of aggregation, leading to the formation of aggregates of the doping elements within the material, which becomes barriers to electron transport. In addition, the particle size of the composite phosphate cathode material is also too small, which lowers the compaction density and, consequently, reduces the energy density of the battery. Compared with Examples 1 to 12, Comparative Example 13 has an over large D50 particle size of the solid particles in the second slurry, indicating insufficient grinding and non-uniform mixing of the components, hindering the formation of the NFPP crystal phase, and thus reducing the ion transport efficiency. Compared with Examples 1 to 12, Comparative Example 14 has an over large D100 particle size of the solid particles in the first slurry, reducing the contact points between particles, thus increasing electron transport resistance. In contrast, Examples 1 to 12 have a D50 size ranged from 0.2 $\mu$m to 1 $\mu$m and a D100 size smaller than or equal to 10 $\mu$m, indicating uniform mixing of the components and less aggregates, effectively improving the compaction density of the composite phosphate cathode material while preventing the specific surface area of the particles from being over low, avoiding adversely affecting ion migration and melting during the sintering process, and ensuring successful formation of the NFPP crystal phase, thereby enhancing the energy density and sodium ion transport efficiency of the battery.

Compared with Examples 1 to 12, Comparative Example 15 has an insufficient amount of carbon source, reducing the formation of the conductive network, leading to decreased electron conductivity of the material. Compared with Examples 1 to 12, Comparative Example 16 has an excessive amount of carbon source, resulting in an over loose carbon layer that negatively affects the compaction density and, consequently, reduces the electron conductivity of the material. In contrast, the amount of carbon source in Examples 1 to 12 is in a range from 1.6% to 5%, allowing the doping metals to catalyze the graphitization of the appropriate amount of surface carbon layer to form a high-quality carbon layer that has a loose porous structure and an appropriate proportion in the composite phosphate cathode material, which enhances the electron conductivity of the composite phosphate cathode material without affecting the compaction density of the composite phosphate cathode material.

Compared with Examples 1 to 12, Comparative Example 17 experiences an over low sintering temperature, leading to insufficient densification of the material and insufficient contact between particles, and resulting in poor electrical conductivity due to inadequate graphitization. Compared with Examples 1 to 12, Comparative Example 18 experiences an over high sintering temperature, which increases the crystal particle boundaries, thereby reducing the electrical conductivity. Compared with Examples 1 to 12, Comparative Example 19 experiences an insufficient sintering time, hindering ideal crystal particle growth and leading to insufficient graphitization, thus resulting in poor electrical conductivity. Compared with Examples 1 to 12, Comparative Example 20 experiences an excessive sintering time, causing abnormal crystal particle growth, which may disrupt effective contact between particles, reducing the electrical conductivity, and thus degrading the electrical performance of the battery.

In Examples 1 to 12, the sintering temperature is in a range from 520°C to 650°C and the sintering time is in a range from 7 h to 14 h, with which the crystal particles have suitable sizes and specific surface areas. During the sintering process, the crystal particles grow normally with significantly reduced impurity phases and thorough graphitization of the organic carbon source, effectively improving the compaction density and sodium ion transport efficiency of the composite phosphate cathode materials.

According to Table 3, the $Na_4Fe_{(2.91-a-b-c-d)}Mn_aTi_bNi_cCu_d(PO_4)_2(P_2O_7)$ type composite phosphate cathode materials have enhanced electron conductivity, and adopt appropriate element doping thereby optimizing the lattice structure of the composite phosphate cathode materials, facilitating sodium ion migration and insertion, thus improving the practical capacity, electrical performance, and cycling stability of the batteries.

(2) $Na_4Fe_{(2.91-a-b-c-d)}Mn_aTi_bNi_cCu_d(PO_4)_2(P_2O_7)N_{e1}F_{e2}$ type composite phosphate cathode materials

To further address the issue of capacity decay of the batteries, Examples 23 to 36 additionally incorporate N and F upon the element doping of Example 4 to prepare the $Na_4Fe_{(2.91-a-b-c-d)}Mn_aTi_bNi_cCu_d(PO_4)_2(P_2O_7)N_{e1}F_{e2}$ type composite phosphate cathode materials.

The rate performance and reversibility of electrical performance of Examples 23 to 36 are tested, and the results are shown in Table 4. N and F are further doped in Examples 23 to 36, while the stoichiometric proportions of other elements except nitrogen and fluorine elements are substantially the same with those in Example 4.

Table 4

| Corresponding examples and comparative examples | Electrical performance of product (2-4.0V,0.2C) | | | Rate performance (2-4.0V,10C) | | |
|---|---|---|---|---|---|---|
| | Charge specific capacity (mAh/g) | Discharge specific capacity (mAh/g) | Efficiency (%) | Charge specific capacity (mAh/g) | Discharge specific capacity (mAh/g) | Efficiency (%) |
| Examples 23 | 105.9 | 104.86 | 99.02% | 66.15 | 64.38 | 97.32% |
| Examples 24 | 105.87 | 103.88 | 98.12% | 68.19 | 66.82 | 97.99% |
| Examples 25 | 105.76 | 104.18 | 98.51% | 69.72 | 67.1 | 96.24% |
| Examples 26 | 95.28 | 90.74 | 95.24% | 62.47 | 60.86 | 97.42% |
| Examples 27 | 105.67 | 104.31 | 98.71% | 67.98 | 65.71 | 96.66% |
| Examples 28 | 106.89 | 105.55 | 98.75% | 75.87 | 70.23 | 92.57% |
| Examples 29 | 105.89 | 103.95 | 98.17% | 72.89 | 68.54 | 94.03% |
| Examples 30 | 93.14 | 87.24 | 93.67% | 62.66 | 60.12 | 95.95% |
| Examples 31 | 92.8 | 89.42 | 96.36% | 63.89 | 63.24 | 98.98% |
| Examples 32 | 93 | 89.59 | 96.33% | 66.89 | 64.32 | 96.16% |
| Examples 33 | 93.21 | 89.35 | 95.86% | 67.7 | 66.11 | 97.65% |
| Examples 34 | 91.93 | 89.03 | 96.85% | 69.34 | 69.2 | 99.80% |
| Examples 35 | 105.84 | 104.47 | 98.71% | 69.94 | 67.97 | 97.18% |
| Examples 36 | 106.13 | 105.14 | 99.07% | 72.34 | 68.89 | 95.23% |

| Corresponding examples and comparative examples | Reversibility of electrical performance (2-4.0V,0.2C) | | |
|---|---|---|---|
| | Charge specific capacity (mAh/g) | Discharge specific capacity (mAh/g) | Efficiency (%) |
| Examples 23 | 103.93 | 102.89 | 99.00% |
| Examples 24 | 103.34 | 101.25 | 97.98% |
| Examples 25 | 104.89 | 103.91 | 99.07% |
| Examples 26 | 93.76 | 90 | 95.99% |
| Examples 27 | 104.82 | 103.1 | 98.36% |
| Examples 28 | 105.87 | 103.98 | 98.21% |
| Examples 29 | 104.39 | 102.99 | 98.66% |
| Examples 30 | 92.56 | 87.11 | 94.11% |
| Examples 31 | 90.23 | 87.34 | 96.80% |
| Examples 32 | 92.81 | 87.52 | 94.30% |
| Examples 33 | 91.89 | 88.79 | 96.63% |
| Examples 34 | 89.16 | 85.23 | 95.59% |
| Examples 35 | 103.23 | 102.21 | 99.01% |
| Examples 36 | 102.89 | 100.23 | 97.41% |

According to Table 4, the charge specific capacity and discharge specific capacity, as well as cycling performance of the batteries S23 to S36 are overall good, indicating that the appropriate co-doping of N and F with other metal ions in the composite phosphate cathode materials effectively enhances the rate performance and reversibility of electrical performance of the batteries.

In some examples, such as the batteries 23, 24, 25, 27, 28, and 29 corresponding to Examples 23, 24, 25, 27, 28, and 29, demonstrate better improvements in charge capacity and discharge capacity and efficiencies and have superior rate performance and reversibility of electrical performance, which are attributed to the appropriate doping amounts of N and F. The N doping optimizes the lattice structure of the material, reducing sodium ion polarization during the charge and discharge. The synergistic effect of N with other metal ions in appropriate ratios improves both the electrical conductivity and ion diffusion rate of the materials, thereby enhancing the cycle life and electrochemical performance of the materials. The synergistic effect of F with other metal ions in appropriate ratios regulates the spin states of the electrons in the 3d orbitals of ferrous ions, adjusting the ferrous ions from a low-spin state in an original sample to a medium-spin state, thereby optimizing the bond strength between oxidation and reduction processes. With some appropriate doping proportions, for example, if the doping amounts of N and F are insufficient, the phosphate groups may not be effectively replaced, inhibiting effective enhancement of the rate performance, and conversely, if the doping amount of F is excessive, the material may be corroded due to the formation of HF during the sintering process, resulting in capacity degradation of the material.

It should be noted that the scope of the present disclosure is not limited by the above embodiments. The above embodiments are only examples, and within the scopes of the technical solutions of the present disclosure, any embodiments having the compositions with substantially the same technical conceptions and achieving the same effects all fall within the technical scope of the present disclosure. Furthermore, without departing from the main conception of the present disclosure, various modifications that a person skilled in the art may conceive upon the embodiments, as well as other embodiments constructed by combining part of composing elements of the embodiments, are also included within the scope of the present disclosure.

## Claims

1. A composite phosphate cathode material comprising a composite phosphate, the composite phosphate being represented by a general formula (I):

$$Na_4Fe_{(2.91-a-b-c-d)}Mn_aTi_bNi_cCu_d(PO_4)_2(P_2O_7)M_e \qquad (I),$$

where M is N, F, or a combination thereof, $0<a<0.2$, $0<b<0.05$, $0<c<0.04$, $0<d<0.05$, $0.05<a+b+c+d<0.2$, and $0 \leq e<0.01$.

2. The composite phosphate cathode material according to claim 1 satisfying at least one of following conditions:

   (1)

   $$0.001<b/a<0.05;$$

   (2)

   $$0.001<c/a<0.04;$$

   (3)

   $$0.001<d/a<0.05.$$

3. The composite phosphate cathode material according to claim 2, wherein the composite phosphate is represented by a general formula (II):

$$Na_4Fe_{(2.91-a-b-c-d)}Mn_aTi_bNi_cCu_d(PO_4)_2(P2O_7)N_{e1}F_{e2} \qquad (II);$$

where $0<e1$, $0<e2$, $0<e1+e2<0.01$.

4. The composite phosphate cathode material according to claim 3, wherein $0<e1<0.005$, and $0<e2<0.005$.

5. The composite phosphate cathode material according to any one of claims 1 to 4, further comprising a carbon material coated on a surface of the composite phosphate, wherein a mass percentage of the carbon material in the composite phosphate cathode material is in a range from 1.6% to 5%.

**6.** A method for preparing a composite phosphate cathode material, comprising steps of:

weighing and mixing metal sources and non-metal sources for preparing the composite phosphate cathode material to obtain a mixture, wherein a molar ratio of sodium to phosphorus in the mixture is in a range from 1:1 to 1.02:1;
dispersing the mixture in a solvent to obtain a first slurry;
grinding the first slurry to obtain a second slurry; and
drying and then sintering the second slurry to obtain the composite phosphate cathode material;
wherein the composite phosphate cathode material comprises a composite phosphate, and the composite phosphate is represented by a general formula (I):

$$Na_4Fe_{(2.91-a-b-c-d)}Mn_aTi_bNi_cCu_d(PO_4)_2(P_2O_7)M_c \qquad (1),$$

where M is N, F, or a combination thereof, $0<a<0.2$, $0<b<0.05$, $0<c<0.04$, $0<d<0.05$, $0.05<a+b+c+d<0.2$, and $0\leq e<0.01$.

**7.** The method according to claim 6, satisfying at least one of following conditions:

(1)

$$0.001<b/a<0.05;$$

(2)

$$0.001<c/a<0.04;$$

(3)

$$0.001<d/a<0.05;$$

(4) particles in the second slurry have a D50 particle size in a range from 0.2 $\mu$m to 1 $\mu$m and a D100 particle size smaller than or equal to 10 $\mu$m;
(5) the sintering is performed at a sintering temperature of 520 °C to 650 °C for a sintering time of 7 hours (h) to 14 h;
(6) the metal sources comprise a sodium source, an iron source, a manganese source, a titanium source, a nickel source, and a copper source, and the non-metal sources comprise a carbon source and a phosphorus source;

the sodium source is selected from the group consisting of sodium phosphate, sodium monohydrogen phosphate, sodium dihydrogen phosphate, and any combination thereof;
the iron source is selected from the group consisting of ferric phosphate, ferrous monohydrogen phosphate, ferrous oxalate, and any combination thereof;
the manganese source is selected the group consisting of manganese carbonate, manganese acetate, manganese oxalate, manganese dioxide, trimanganese tetroxide, and any combination thereof;
the titanium source is selected from the group consisting of titanium oxide, titanium tetraethoxide, titanium isopropoxide, and any combination thereof;
the nickel source is selected from the group consisting of nickel carbonate, nickel acetate, nickel oxalate, nickel oxide, and any combination thereof;
the copper source is selected from the group consisting of copper acetate, copper oxalate, copper citrate, copper oxide, and any combination thereof;
the carbon source is selected from the group consisting of polyethylene glycol, glucose, citric acid, sucrose, starch, and any combination thereof;
the phosphorus source is selected from the group consisting of sodium dihydrogen phosphate dihydrate, disodium hydrogen phosphate, ammonium dihydrogen phosphate, diammonium hydrogen phosphate, and any combination thereof;

optionally, the non-metal sources further comprise a nitrogen source, a fluorine source, or a combination thereof;

optionally, the nitrogen source is selected from the group consisting of urea, polyvinyl pyrrolidone, dopamine, melamine, and any combination thereof;

optionally, the fluorine source is selected from the group consisting of sodium fluoride, ammonium fluoride, manganese fluoride, and any combination thereof.

8. The method according to claim 7, wherein the mixture comprises Na, Fe, Mn, Ti, Ni, Cu, $PO_4$, $P_2O_7$, N, and F in a molar ratio of (4.01 to 4.0125):(2.91-a-b-c-d):a:b:c:d:2:1:e1:e2, 0 <e1, 0<e2, 0<e1+e2<0.01;

further, 0<e1<0.005, and 0<e2<0.005.

9. A cathode plate, comprising the composite phosphate cathode material according to any one of claims 1 to 4, or the composite phosphate cathode material prepared by the method according to any one of claims 5 to 8.

10. A secondary battery, comprising the cathode plate according to claim 10.

weighing and mixing metal sources and non-metal sources for preparing the composite phosphate cathode material to obtain a mixture, wherein a molar ratio of sodium to phosphorus in the mixture is in a range from 1:1 to 1.01:1

S100

dispersing the mixture in a solvent to obtain a first slurry

S200

grinding the first slurry to obtain a second slurry

S300

drying and then sintering the second slurry to obtain the composite phosphate cathode material, wherein the composite phosphate cathode material comprises a composite phosphate, and the composite phosphate is represented by a general formula (I):
$Na_4Fe_{(2.91-a-b-c-d)}Mn_aTi_bNi_cCu_d(PO_4)_2(P_2O_7)M_e$ (I),
where M is N, F, or a combination thereof, $0 < a < 0.2$, $0 < b < 0.05$, $0 < c < 0.04$, $0 < d < 0.05$, $0.05 < a+b+c+d < 0.2$, and $0 \leq e < 0.01$

S400

FIG. 1

TRANSLATION

## INTERNATIONAL SEARCH REPORT

International application No.

**PCT/CN2024/126527**

| A. | CLASSIFICATION OF SUBJECT MATTER |
|---|---|

H01M4/36(2006.01)i; H01M4/58(2010.01)i; H01M4/136(2010.01)i; H01M10/0525(2010.01)i; H01M4/62(2006.01)i

According to International Patent Classification (IPC) or to both national classification and IPC

| B. | FIELDS SEARCHED |
|---|---|

Minimum documentation searched (classification system followed by classification symbols)

IPC:H01M4/-,H01M10/-

Documentation searched other than minimum documentation to the extent that such documents are included in the fields searched

Electronic data base consulted during the international search (name of data base and, where practicable, search terms used)

DWPI, CNTXT, JPTXT, USTXT, WOTXT, 中国期刊网全文数据库, CJFD, ISI web of science: 电池, 电芯, NFPP, Na4Fe3PO42P2O7, 磷酸盐, 锰, mn, 钛, ti, cu, 铜, 镍, ni, battery, cell, phosphate, manganese, titanium, copper, nickel

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 116154121 A (CENTRAL SOUTH UNIVERSITY) 23 May 2023 (2023-05-23) description, paragraphs 8-9 and 13-14 | 1-10 |
| A | CN 113675390 A (FUDAN UNIVERSITY) 19 November 2021 (2021-11-19) description, paragraphs 7-10 | 1-10 |
| A | CN 114538403 A (SHANGHAI JIAO TONG UNIVERSITY) 27 May 2022 (2022-05-27) description, paragraphs 11-13 | 1-10 |
| A | CN 118538896 A (WUHAN TIANNA TECHNOLOGY CO., LTD.) 23 August 2024 (2024-08-23) description, paragraphs 7-25 | 1-10 |
| A | US 2015303474 A1 (FARADION LTD.) 22 October 2015 (2015-10-22) description, paragraphs 17-43 | 1-10 |
| A | WO 2024152623 A1 (CONTEMPORARY AMPEREX TECHNOLOGY CO., LTD.) 25 July 2024 (2024-07-25) description, paragraphs 25-30 | 1-10 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **06 May 2025** | **26 June 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**TRANSLATION**

**INTERNATIONAL SEARCH REPORT**

International application No.

**PCT/CN2024/126527**

C.      DOCUMENTS CONSIDERED TO BE RELEVANT

| Category* | Citation of document, with indication, where appropriate, of the relevant passages | Relevant to claim No. |
|---|---|---|
| A | WO 2024169212 A1 (CONTEMPORARY AMPEREX TECHNOLOGY CO., LTD.) 22 August 2024 (2024-08-22) description, paragraphs 7-13 | 1-10 |

**INTERNATIONAL SEARCH REPORT**
Information on patent family members

International application No.

**PCT/CN2024/126527**

| Patent document cited in search report | | | Publication date (day/month/year) | Patent family member(s) | | | Publication date (day/month/year) |
|---|---|---|---|---|---|---|---|
| CN | 116154121 | A | 23 May 2023 | None | | | |
| CN | 113675390 | A | 19 November 2021 | None | | | |
| CN | 114538403 | A | 27 May 2022 | CN | 114538403 | B | 22 August 2023 |
| CN | 118538896 | A | 23 August 2024 | None | | | |
| US | 2015303474 | A1 | 22 October 2015 | EP | 2925670 | A1 | 07 October 2015 |
| | | | | GB | 201221425 | D0 | 09 January 2013 |
| | | | | WO | 2014083313 | A1 | 05 June 2014 |
| | | | | GB | 201314236 | D0 | 25 September 2013 |
| | | | | KR | 20150080652 | A | 09 July 2015 |
| | | | | US | 10050271 | B2 | 14 August 2018 |
| | | | | JP | 2016504257 | A | 12 February 2016 |
| | | | | JP | 6393271 | B2 | 19 September 2018 |
| WO | 2024152623 | A1 | 25 July 2024 | CN | 118367139 | A | 19 July 2024 |
| WO | 2024169212 | A1 | 22 August 2024 | CN | 118507713 | A | 16 August 2024 |

Form PCT/ISA/210 (patent family annex) (July 2022)